# EUROPEAN PATENT APPLICATION

(11) **EP 4 424 720 A1**
(43) Date of publication of application: **04.09.2024**
(21) Application number: 22886054.0
(22) Date of filing: 27.10.2022
(51) Int. Cl.: C08F 4/646, C08F 4/649, C08F 10/00, C08F 110/06, C08F 4/02

(54) **OLEFIN POLYMERIZATION CATALYST COMPONENT, CATALYST SYSTEM, PREPOLYMERIZATION CATALYST COMPOSITION AND OLEFIN POLYMERIZATION METHOD**

(30) Priority: 28.10.2021 CN 202111264973
(71) Applicant: CHINA PETROLEUM & CHEMICAL CORPORATION, Chaoyang District Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: ZHANG, Jigui, Beijing 100013 (CN); ZHOU, Junling, Beijing 100013 (CN); YU, Yangdianchen, Beijing 100013 (CN); GAO, Futang, Beijing 100013 (CN); QI, Lin, Beijing 100013 (CN); WANG, Yu, Beijing 100013 (CN); LI, Weili, Beijing 100013 (CN); REN, Chunhong, Beijing 100013 (CN); LIU, Tao, Beijing 100013 (CN); ZHANG, Tianyi, Beijing 100013 (CN); LI, Ran, Beijing 100013 (CN)
(74) Representative: Hoffmann Eitle
(86) International application number: PCT/CN2022/127883
(87) International publication number: WO 2023/072179

(57) **Abstract**

The present invention provides an olefin polymerization catalyst component, a catalyst system, a prepolymerization catalyst composition and an olefin polymerization method, which belong to the field of olefin polymerization catalysts. The catalyst component contains magnesium, titanium, halogen, and an internal electron donor, and the internal electron donor comprises a compound A, a compound B and a compound C, wherein the compound A is selected from a hydroxybenzoyl compound represented by formula (I), the compound B is selected from one or more of an ester compound other than the compound A and an ether compound, and the compound C is selected from an alkoxysilane represented by formula RₙSi(OR₆)₄₋ₙ, and wherein, a content of the compound A may be zero. When the catalyst system comprising the catalyst component and a co-catalyst component or a reaction product of the two, or a prepolymerization catalyst composition prepared by further prepolymerization is used for olefin copolymerization, an excellent olefin copolymerization ability is exhibited, and a good polymerization activity, stereospecificity and hydrogen adjustment sensitivity are maintained; in addition, polymer particles that are obtained have a good morphology and a high sphericity, and contain less fine powder.

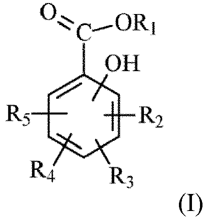

## Description

### Cross-Reference to Related Application

The present invention claims the priority of Chinese Patent Application No. CN202111264973.2 entitled "OLEFIN POLYMERIZATION CATALYST COMPONENT, CATALYST SYSTEM AND APPLICATION THEREOF AND OLEFIN POLYMERIZATION METHOD" and filed on October 28, 2021, the content of which is incorporated herein by reference in its entirety.

### Field of the Invention

The present invention belongs to the technical field of olefin polymerization catalysts, and specifically relates to an olefin polymerization catalyst component, a catalyst system, a prepolymerization catalyst composition, and an olefin polymerization method.

### Background of the Invention

It is well known in the prior art that, a titanium compound and an electron donor are loaded onto active magnesium halide to prepare a Ziegler-Natta catalyst. In particular, when it is used for the polymerization of an olefin (especially propylene), in order to improve polymerization activity, stereospecificity, hydrogen adjustment sensitivity, and olefin copolymerization ability of the catalyst, the electron donor compound is an essential ingredient in the catalyst component.

With the development of electron donor compounds, polyolefin catalysts have been constantly upgraded. So far, a plurality of patents have disclosed a large number of electron donor compounds suitable for preparing Ziegler-Natta catalysts, which mainly include: phthalate-based compounds (EP0045977), 1,3-diether-based compounds (EP0361493, and EP0728724), 1,3-diketone-based compounds (CN1105671A), specially substituted malonate-based compounds (CN1236732A, CN1236733A, CN1236734A, and CN1292800A), succinate-based compounds (WO0063261, US6825309B2, and US7005487B2), β-substituted glutarate-based compounds (WO0055215), cyanoester-based compounds (CN1242780A), diamine-based compounds (CN1087918A), maleic acid diester-based compounds (WO03022894), and special polyester-based compounds (CN1436766A, and CN1436796A), etc.

The use of different internal electron donor compounds will endow the prepared catalysts with different characteristics, for example, some catalysts have a relatively high polymerization activity, some catalysts have a relatively good hydrogen adjustment sensitivity, and polyolefin resins prepared by some catalysts have a relatively wide molecular weight distribution (such as dihydric alcohol ester-based compounds and the catalysts thereof disclosed in CN1436766A and CN1552740A). However, in the industrial production of polyolefins, it is highly required that the catalysts used for polymerization have a completely excellent comprehensive performance. In the prior art, one usually uses a method of adding several internal electron donor compounds in the process of catalyst preparation so as to improve the comprehensive performance of the catalyst. In the technology disclosed in US6825309B2, a catalyst prepared by compounding succinate and phthalate not only maintains the characteristic of wide molecular weight distribution of a polymer prepared from propylene polymerization by using single succinate as internal electron donor catalyst, but also further improves the stereospecificity of the catalyst. CN1743346A discloses a catalyst component and a catalyst, wherein, when the catalyst prepared by compounding 1,3-dihydric alcohol ester with dibutyl phthalate and ethyl benzoate is used for propylene polymerization, the obtained polymer has a relatively high isotacticity and a wide molecular weight distribution.

With the requirement of social development, catalysts with good olefin copolymerization performance have become a very important research direction in the art. CN102796213B discloses a catalyst prepared by compounding a hydroxybenzoyl-based compound with a phthalate-based compound or a diether-based compound, which exhibits a high polymerization activity, good hydrogen adjustment sensitivity, and high stereospecificity when used for propylene homopolymerization. However, as shown in practical applications, this type of catalyst has a relatively insufficient olefin copolymerization ability when used for olefin copolymerization reactions. In the art, an alkoxysilane compound is commonly used as an external electron donor, to improve the hydrogen adjustment sensitivity of a catalyst system. In CN103509137A, it is found that, when used in the preparation of an olefin polymerization catalyst component by means of a precipitation method, the alkoxysilane compound can effectively shorten preparation time of the catalyst component, while improving the particle morphology of the catalyst and fine powder content of the polymer. In CN1373777A, it is found that, when used in the preparation of an ethylene polymerization catalyst, the alkoxysilane can improve the polymerization activity and hydrogen adjustment sensitivity of the catalyst.

### Summary of the Invention

The objective of the present invention is to provide a catalyst component for olefin polymerization, when the catalyst component is used in combination with a alkyl aluminum and an optional external electron donor compound for olefin (in particular, ethylene and propylene) copolymerization, it exhibits an excellent olefin copolymerization ability while maintaining a good polymerization activity, stereospecificity, and hydrogen adjustment sensitivity. In addition, the polymer particles obtained from catalyzing olefins with the catalyst component and a catalyst system thereof have a good morphology.

According to one aspect of the present invention, there is provided an olefin polymerization catalyst component, characterized in that, the olefin polymerization catalyst component comprises magnesium, titanium, halogen, and an internal electron donor, and the internal electron donor comprises a compound B and a compound C, wherein the compound B is selected from one or more of an ester compound other than a hydroxybenzoyl compound represented by formula (I) and an ether compound; 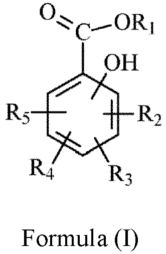
in formula (I), R₁ is selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; R₂, R₃, R₄, and R₅ each are independently selected from hydrogen, halogen, nitro, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; or, two or more groups of R₂, R₃, R₄, and R₅ are bonded with each other to form a ring; and
the compound C is selected from an alkoxysilane represented by formula RₙSi(OR₆)₄₋ₙ; and in formula RₙSi(OR₆)₄₋ₙ, R and R₆ each are independently selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl, and n is an integer of 0 to 3.

According to another aspect of the present invention, there is provided an olefin polymerization catalyst component, and the olefin polymerization catalyst component comprises magnesium, titanium, halogen, and an internal electron donor, and the internal electron donor comprises a compound A, a compound B and a compound C;
wherein, the compound A is selected from a hydroxybenzoyl compound represented by formula (I), 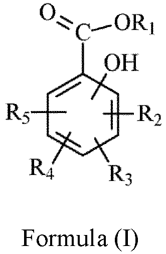
in formula (I), R₁ is selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; R₂, R₃, R₄, and R₅ each are independently selected from hydrogen, halogen, nitro, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; or, two or more groups of R₂, R₃, R₄, and R₅ are bonded with each other to form a ring;
the compound B is selected from one or more of an ester compound other than the compound A and an ether compound; and
the compound C is selected from an alkoxysilane represented by formula RₙSi(OR₆)₄₋ₙ; and in formula RₙSi(OR₆)₄₋ₙ, R and R₆ each are independently selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl, and n is an integer of 0 to 3.

According to the present invention, preferably, in formula (I), R₁ is selected from hydrogen, substituted or unsubstituted C₁-C₆ linear alkyl, substituted or unsubstituted C₃-C₆ branched alkyl, substituted or unsubstituted C₃-C₆ cycloalkyl, substituted or unsubstituted C₆-C₁₀ aryl, and substituted or unsubstituted C₇-C₁₀ aralkyl; and R₂, R₃, R₄, and R₅ each are independently selected from hydrogen, substituted or unsubstituted C₁-C₈ linear alkyl, substituted or unsubstituted C₃-C₈ branched alkyl, substituted or unsubstituted C₃-C₆ cycloalkyl, substituted or unsubstituted C₆-C₁₀ aryl, and substituted or unsubstituted C₇-C₁₀ aralkyl.

According to the present invention, preferably, in formula (I), R₁ is selected from methyl, ethyl, n-propyl, isopropyl, n-butyl, isobutyl, t-butyl, n-pentyl, n-hexyl, benzyl, or phenylethyl; and R₂, R₃, R₄, and R₅ each are independently selected from hydrogen, methyl, ethyl, n-propyl, isopropyl, n-butyl, isobutyl, t-butyl, n-pentyl, isopentyl, cyclopentyl, n-hexyl, n-heptyl, or tolyl.

According to the present invention, preferably, when the compound A is a hydroxybenzoyl compound represented by (I), the compound A is selected from one or more of a 4-hydroxybenzoic acid compound, 4-hydroxybenzoate compound, 2-hydroxybenzoic acid compound, and 2-hydroxybenzoate compound; more preferably selected from one or more of the 2-hydroxybenzoic acid compound and 2-hydroxybenzoate compound.

According to the present invention, specific examples of the compound A may include but are not limited to: methyl 2-hydroxybenzoate, ethyl 2-hydroxybenzoate, n-propyl 2-hydroxybenzoate, isopropyl 2-hydroxybenzoate, n-butyl 2-hydroxybenzoate, isobutyl 2-hydroxybenzoate, n-pentyl 2-hydroxybenzoate, n-hexyl 2-hydroxybenzoate, methyl 2-hydroxy-3-methylbenzoate, methyl 2-hydroxy-4-methylbenzoate, methyl 2-hydroxy-5-methylbenzoate, methyl 2-hydroxy-3-ethylbenzoate, methyl 2-hydroxy-4-ethylbenzoate, methyl 2-hydroxy-5-ethylbenzoate, ethyl 2-hydroxy-3-methylbenzoate, ethyl 2-hydroxy-4-methylbenzoate, ethyl 2-hydroxy-5-methylbenzoate, ethyl 2-hydroxy-3-ethylbenzoate, ethyl 2-hydroxy-4-ethylbenzoate, ethyl 2-hydroxy-5-ethylbenzoate, n-propyl 2-hydroxy-3-methylbenzoate, n-propyl 2-hydroxy-4-methylbenzoate, n-propyl 2-hydroxy-5-methylbenzoate, n-propyl 2-hydroxy-3-ethylbenzoate, n-propyl 2-hydroxy-4-ethylbenzoate, n-propyl 2-hydroxy-5-ethylbenzoate, isopropyl 2-hydroxy-3-methylbenzoate, isopropyl 2-hydroxy-4-methylbenzoate, isopropyl 2-hydroxy-5-methylbenzoate, isopropyl 2-hydroxy-3-ethylbenzoate, isopropyl 2-hydroxy-4-ethylbenzoate, isopropyl 2-hydroxy-5-ethylbenzoate, isobutyl 2-hydroxy-3-methylbenzoate, isobutyl 2-hydroxy-4-methylbenzoate, isobutyl 2-hydroxy-5-methylbenzoate, isobutyl 2-hydroxy-3-ethylbenzoate, isobutyl 2-hydroxy-4-ethylbenzoate, isobutyl 2-hydroxy-5-ethylbenzoate, ethyl 2-hydroxy-3-n-propylbenzoate, ethyl 2-hydroxy-4-n-propylbenzoate, ethyl 2-hydroxy-5-n-propylbenzoate, ethyl 2-hydroxy-4-isopropylbenzoate, ethyl 2-hydroxy-4-isobutylbenzoate, ethyl 2-hydroxy-4-t-butylbenzoate, ethyl 2-hydroxy-4-n-pentylbenzoate, ethyl 2-hydroxy-4-isopentylbenzoate, and ethyl 2-hydroxy-4-cyclopentylbenzoate.

According to the present invention, the ester compound of compound B is selected from one or more of aliphatic monocarboxylate, aliphatic polycarboxylate, aromatic monocarboxylate, aromatic polycarboxylate, and dihydric alcohol ester compound; preferably aromatic polycarboxylate; more preferably alkyl ester of aromatic polycarboxylic acid; and more preferably alkyl ester of aromatic dicarboxylic acid.

According to the present invention, the alkyl aromatic dicarboxylate is alkyl phthalate, and preferably one or more of C₁-C₁₀ linear alkyl phthalate, C₃-C₁₀ branched alkyl phthalate, and C₃-C₁₀ cycloalkyl phthalate.

In the present invention, the term "aliphatic monocarboxylate" refers to a compound formed by aliphatic monocarboxylic acid and monohydric alcohol through esterification reaction. The term "aliphatic polycarboxylate" refers to a compound formed by aliphatic polycarboxylic acid and monohydric alcohol through esterification reaction. The term "aromatic monocarboxylate" refers to a compound formed by aromatic monocarboxylic acid and monohydric alcohol through esterification reaction. The term "aromatic polycarboxylate" refers to a compound formed by aromatic polycarboxylic acid and monohydric alcohol through esterification reaction.

In the present invention, examples of aliphatic monocarboxylate, aliphatic polycarboxylate, aromatic monocarboxylate, and aromatic polycarboxylate may be: benzoate, phthalate, malonate, succinate, glutarate, neopentanoate, and carbonate; and preferably alkyl benzoate, alkyl phthalate, alkyl malonate, alkyl succinate, alkyl glutarate, alkyl neopentanoate, and alkyl carbonate.

Specifically, in the present invention, examples of aliphatic monocarboxylate, aliphatic polycarboxylate, aromatic monocarboxylate, and aromatic polycarboxylate may include but are not limited to: ethyl benzoate, diethyl phthalate, diisobutyl phthalate, di-n-butyl phthalate, diisooctyl phthalate, di-n-octyl phthalate, diethyl malonate, dibutyl malonate, diisobutyl malonate, diethyl 2,3-diisopropylsuccinate, diisobutyl 2,3-diisopropylsuccinate, di-n-butyl 2,3-diisopropylsuccinate, dimethyl 2,3-diisopropylsuccinate, diisobutyl 2,2-dimethylsuccinate, diisobutyl 2-ethyl-2-methylsuccinate, diethyl 2-ethyl-2-methylsuccinate, diethyl glutarate, di-n-butyl glutarate, diisobutyl glutarate, dimethyl carbonate, diethyl carbonate, diisobutyl carbonate, diethyl adipate, di-n-butyl adipate, diethyl sebacate, di-n-butyl sebacate, diethyl maleate, di-n-butyl maleate, diethyl naphthalene dicarboxylate, di-n-butyl naphthalene dicarboxylate, triethyl trimellitate, tri-n-butyl trimellitate, triethyl biphenyl tricarboxylate, tri-n-butyl biphenyl tricarboxylate, tetraethyl pyromellitate, and tetra-n-butyl pyromellitate.

In the present invention, the term "dihydric alcohol ester compound" refers to a compound formed by dihydric alcohol and monocarboxylic acid or polycarboxylic acid through esterification reaction. For example, the dihydric alcohol ester compound may be a compound represented by formula (II). 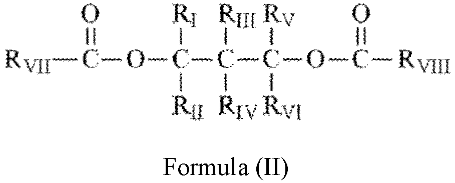 in formula (II), R_{I}, R_{II}, R_{III}, R_{IV}, R_{V}, and R_{VI} each are independently selected from hydrogen, substituted or unsubstituted C₁-C₁₀ aliphatic hydrocarbyl, substituted or unsubstituted C₆-C₁₀ aryl, and substituted or unsubstituted C₇-C₁₀ aralkyl; or, two or more groups of R_{I}, R_{II}, R_{III}, R_{IV}, R_{V}, and R_{VI} are bonded with each other to form a ring; and R_{VII} and R_{VIII} each are independently selected from substituted or unsubstituted C₁-C₁₀ linear alkyl, substituted or unsubstituted C₃-C₁₀ branched alkyl, substituted or unsubstituted C₃-C₂₀ cycloalkyl, substituted or unsubstituted C₆-C₂₀ aryl, and substituted or unsubstituted C₇-C₂₀ aryl aliphatic hydrocarbyl.

Preferably, in formula (II), R_{I}, R_{II}, R_{III}, R_{IV}, R_{V}, and R_{VI} each are independently selected from hydrogen, substituted or unsubstituted C₁-C₆ linear alkyl, substituted or unsubstituted C₁-C₆ branched alkyl, substituted or unsubstituted C₂-C₆ linear alkenyl, substituted or unsubstituted C₃-C₆ branched alkenyl, substituted or unsubstituted C₃-C₆ cycloalkyl, substituted or unsubstituted C₆-C₁₀ aryl, and substituted or unsubstituted C₇-C₁₀ aralkyl; or, two or more groups of R_{I}, R_{II}, R_{III}, R_{IV}, R_{V}, and R_{VI} are bonded with each other to form a ring; and Rvn and Rvm each are independently selected from substituted or unsubstituted C₁-C₆ linear alkyl, substituted or unsubstituted C₃-C₆ branched alkyl, substituted or unsubstituted C₃-C₆ cycloalkyl, substituted or unsubstituted C₆-C₁₀ aryl, substituted or unsubstituted C₇-C₁₀ aralkyl, and substituted or unsubstituted C₇-C₁₀ arylalkenyl .

More preferably, in formula (II), at least one of R_{I}, R_{II}, R_{V}, and R_{VI} is hydrogen, and R_{I}, R_{II}, R_{V}, and R_{VI} are not hydrogen at the same time.

Further preferably, in formula (II), at least one of R_{I} and R_{II} is hydrogen, and when only one of R_{I} and R_{II} is hydrogen, the other group of R_{I} and R_{II} is one of methyl, ethyl, n-propyl, isopropyl, n-butyl, isobutyl, t-butyl, phenyl, and halophenyl; at least one of R_{V} and R_{VI} is hydrogen, and when only one of R_{V} and R_{VI} is hydrogen, the other group of Rv and Rvi is one of methyl, ethyl, n-propyl, isopropyl, n-butyl, isobutyl, t-butyl, phenyl, and halophenyl; R_{III} and R_{IV} each are independently one of hydrogen, methyl, ethyl, n-propyl, isopropyl, n-butyl, isobutyl, t-butyl, allyl, n-pentyl, isopentyl, and n-hexyl; or, R_{III} and R_{IV} are bonded with each other to form substituted or unsubstituted fluorenyl; and R_{VN} and R_{VIII} each are independently one of methyl, ethyl, n-propyl, isopropyl, n-butyl, isobutyl, t-butyl, n-pentyl, neopentyl, cyclopentyl, cyclohexyl, phenyl, halophenyl, tolyl, halogmethylphenyl, benzyl, phenylethyl, and styryl.

Specifically, examples of the dihydric alcohol ester compound may include but is not limited to:
1,3-propanediol dibenzoate, 2-methyl-1,3-propanediol dibenzoate, 2-ethyl-1,3-propanediol dibenzoate, 2,2-dimethyl-1,3-propanediol dibenzoate, (R) -1-phenyl-1,3-propanediol dibenzoate, 1,3-diphenyl-1,3-propanediol dibenzoate, 1,3-diphenyl-1,3-propanediol di-n-propylate, 1,3-diphenyl-2-methyl-1,3-propanediol di-n-propylate, 1,3-diphenyl-2-methyl-1,3-propanediol diacetate, 1,3-diphenyl-2,2-dimethyl-1,3-propanediol dibenzoate, 1,3-diphenyl-2,2-dimethyl-1,3-propanediol di-n-propylate, 1,3-di-t-butyl-2-ethyl-1,3-propanediol dibenzoate, 1,3-diphenyl-1,3-propanediol diacetate, 1,3-diisopropyl-1,3-propanediol di(4-n-butylbenzoic acid)ester, 1-phenyl-2-amino-1,3-propanediol dibenzoate, 1-phenyl-2-methyl-1,3-butanediol dibenzoate, 1-phenyl-2-methyl-1,3-butanediol dineopentanoate, 3-n-butyl-2,4-pentanediol dibenzoate, 3,3-dimethyl-2,4-pentanediol dibenzoate, (2S,4S)-(+)-2,4-pentanediol dibenzoate, (2R,4R)-(+)-2,4-pentanediol dibenzoate, 2,4-pentanediol di(p-chlorobenzoic acid)ester, 2,4-pentanediol di(m-chlorobenzoic acid)ester, 2,4-pentanediol di(p-bromobenzoic acid)ester, 2,4-pentanediol di(o-bromobenzoic acid)ester, 2,4-pentanediol di(p-methylbenzoic acid)ester, 2,4-pentanediol di(p-t-butylbenzoic acid)ester, 2,4-pentanediol di(p-n-butylbenzoic acid)ester, 2-methyl-1,3-pentanediol di(p-chlorobenzoic acid)ester, 2-methyl-1,3-pentanediol di(p-methylbenzoic acid)ester, 2-n-butyl-1,3-pentanediol di(p-methylbenzoic acid)ester, 2-methyl-1,3-pentanediol di(p-t-butylbenzoic acid)ester, 2-methyl-1,3-pentanediol dineopentanoate, 2-methyl-3-cinnamoyloxy-1-n-pentanol benzoate, 2,2-dimethyl-1,3-pentanediol dibenzoate, 2,2-dimethyl-3-cinnamoyloxy-1-n-pentanol benzoate, 2-ethyl-1,3-pentanediol dibenzoate, 2-n-butyl-1,3-pentanediol dibenzoate, 2-allyl-1,3-pentanediol dibenzoate, 2-methyl-1,3-pentanediol dibenzoate, 2-ethyl-1,3-pentanediol dibenzoate, 2-n-propyl-1,3-pentanediol dibenzoate, 2-n-butyl-1,3-pentanediol dibenzoate, 2,2-di-n-propyl-1,3-pentanediol dibenzoate, 1,3-pentanediol di(p-chlorobenzoic acid)ester, 1,3-pentanediol di(m-chlorobenzoic acid)ester, 1,3-pentanediol di(p-bromobenzoic acid)ester, 1,3-pentanediol di(o-bromobenzoic acid)ester, 1,3-pentanediol di(p-methylbenzoic acid)ester, 1,3-pentanediol di(p-t-butylbenzoic acid)ester, 1,3-pentanediol di(p-butylbenzoic acid)ester, 3-cinnamoyloxy-1-n-pentanol benzoate, 1,3-pentanediol dicinnamate, 1,3-pentanediol di-n-propionate, 2-ethyl-1,3-pentanediol dibenzoate, 2-n-butyl-1,3-pentanediol dibenzoate, 2-allyl-1,3-pentanediol dibenzoate, 2,2,4-trimethyl-1,3-pentanediol diisopropylformate, 1-trifluoromethyl-3-methyl-2,4-pentanediol dibenzoate, 2,4-pentanediol di-p-fluoromethylbenzoate, 2,4-pentanediol di(2-furancarboxylic acid) ester, 2-methyl-6-(1-n-hepten)yl-2,4-heptanediol dibenzoate, 3-methyl-6-(1-n-hepten)yl-2,4-heptanediol dibenzoate, 4-methyl-6-(1-n-hepten)yl-2,4-heptanediol dibenzoate, 5-methyl-6-(1-n-hepten)yl-2,4-heptanediol dibenzoate, 6-methyl-6-(1-n-hepten)yl-2,4-heptanediol dibenzoate, 3-ethyl-6-(1-n-hepten)yl-2,4-heptanediol dibenzoate, 4-ethyl-6-(1-n-hepten)yl-2,4-heptanediol dibenzoate, 5-ethyl-6-(1-n-hepten)yl-2,4-heptanediol dibenzoate, 6-ethyl-6-(1-n-hepten)yl-2,4-heptanediol dibenzoate, 3-n-propyl-6-(1-n-hepten)yl-2,4-heptanediol dibenzoate, 4-n-propyl-6-(1-n-hepten)yl-2,4-heptanediol dibenzoate, 5-n-propyl-6-(1-n-hepten)yl-2,4-heptanediol dibenzoate, 6-n-propyl-6-(1-n-hepten)yl-2,4-heptanediol dibenzoate, 3-n-butyl-6-(1-n-hepten)yl-2,4-heptanediol dibenzoate, 4-n-butyl-6-(1 -n-hepten)yl-2,4-heptanediol dibenzoate, 5-n-butyl-6-(1-n-hepten)yl-2,4-heptanediol dibenzoate, 6-n-butyl-6-(1 -n-hepten)yl-2,4-heptanediol dibenzoate, 3,5-dimethyl-6-(1-n-hepten)yl-2,4-heptanediol dibenzoate, 3,5-diethyl-6-(1-n-hepten)yl-2,4-heptanediol dibenzoate, 3,5-di-n-propyl-6-(1-n-hepten)yl-2,4-heptanediol dibenzoate, 3,5-di-n-butyl-6-(1-n-hepten)yl-2,4-heptanediol dibenzoate, 3,3-dimethyl-6-(1-n-hepten)yl-2,4-heptanediol dibenzoate, 3,3-diethyl-6-(1-n-hepten)yl-2,4-heptanediol dibenzoate, 3,3-di-n-propyl -6-(1-n-hepten)yl-2,4-heptanediol dibenzoate, 3,3-di-n-butyl -6-(1-n-hepten)yl-2,4-heptanediol dibenzoate, 3-ethyl-3,5-heptanediol dibenzoate, 4-ethyl-3,5-heptanediol dibenzoate, 5-ethyl-3,5-heptanediol dibenzoate, 3-n-propyl-3,5-heptanediol dibenzoate, 4-n-propyl-3,5-heptanediol dibenzoate, 3-n-butyl-3,5-heptanediol dibenzoate, 2,3-dimethyl-3,5-heptanediol dibenzoate, 2,4-dimethyl-3,5-heptanediol dibenzoate, 2,5-dimethyl-3,5-heptanediol dibenzoate, 2,6-dimethyl-3,5-heptanediol dibenzoate, 3,5-dimethyl-3,5-heptanediol dibenzoate, 4,4-dimethyl-3,5-heptanediol dibenzoate, 4,5-dimethyl-3,5-heptanediol dibenzoate 4,6-dimethyl-3,5-heptanediol dibenzoate, 6,6-dimethyl-3,5-heptanediol dibenzoate, 2-methyl-3-ethyl-3,5-heptanediol dibenzoate, 2-methyl-4-ethyl-3,5-heptanediol dibenzoate, 2-methyl-5-ethyl-3,5-heptanediol dibenzoate, 3-methyl-3-ethyl-3,5 -heptanediol dibenzoate, 3-methyl-4-ethyl-3,5-heptanediol dibenzoate, 3-methyl-5-ethyl-3,5-heptanediol dibenzoate, 4-methyl-3-ethyl-3,5-heptanediol dibenzoate, 4-methyl-4-ethyl-3,5-heptanediol dibenzoate, 9,9-bis(benzoyloxymethyl)fluorene, 9,9-bis(m-methoxybenzoyloxy)methyl)fluorene, 9,9-bis(m-chlorobenzoyloxy)methyl)fluorene, 9,9-bis((p-chlorobenzoyloxy)methyl)fluorene, 9,9-bis(cinnamoyloxymethyl)fluorene, 9-(benzoyloxymethyl)-9-(propionyloxymethyl)fluorene, 9,9-bis(propionyloxymethyl)fluorene, 9,9-bis(acryloxymethyl)fluorene, and 9,9-bis(pivaloyloxymethyl)fluorene.

The above dihydric alcohol ester compound in the present invention is disclosed in CN1213080C, CN1169845C, WO03/068828, and WO03/068723, the related disclosures of which are incorporated into the present invention by reference.

According to the present invention, the ether compound of compound B is a diether compound; and the diether compound is preferably selected from a 1,3-diether compound represented by formula (III). 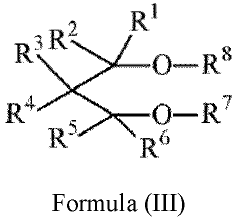 in formula (III), R¹, R², R³, R⁴, R⁵, and R⁶ each are independently selected from hydrogen, halogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; or, two or more groups of R¹, R², R³, R⁴, R⁵, and R⁶ are bonded with each other to form a ring; and R⁷ and R⁸ each are independently selected from substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl.

Preferably, in formula (III), R₁, R₂, R₅, and R₆ each are hydrogen;
R⁷ and R⁸ each are independently one of substituted or unsubstituted C₁-C₄ linear alkyl, substituted or unsubstituted C₃-C₄ branched alkyl; and are more preferably methyl;
R³ is any one of methyl, ethyl, n-propyl, and isopropyl, and R⁴ is any one of ethyl, n-propyl, isopropyl, n-butyl, isobutyl, t-butyl, isopentyl, 2-ethylhexyl, cyclopentyl, cyclohexyl, methylcyclohexyl, phenyl, and benzyl; or, R³ is hydrogen, and R⁴ is any one of ethyl, n-butyl, s-butyl, t-butyl, 2-ethylhexyl, cyclohexyethyl, diphenylmethyl, p-chlorophenyl, 1-naphthyl, and 1-decahydronaphthyl; or, R³ and R⁴ are the same and each are any one of ethyl, n-propyl, isopropyl, n-butyl, isobutyl, t-butyl, neopentyl, phenyl, benzyl, cyclohexyl, or cyclopentyl; or, R³ and R⁴ are bonded with each other to form cyclopentadienyl, fluorenyl, or indenyl.

The above 1,3-diether compound in the present invention is disclosed in CN1015062B and CN1121368C, the related disclosures of which are incorporated into the present invention herein by reference in their entireties.

According to the present invention, preferably, in formula RₙSi(OR₆)₄₋ₙ, Rand R₆ each are independently selected from hydrogen, substituted or unsubstituted C₁-C₆ linear alkyl, substituted or unsubstituted C₃-C₆ branched alkyl, substituted or unsubstituted C₃-C₆ cycloalkyl, substituted or unsubstituted C₆-C₁₀ aryl, and substituted or unsubstituted C₇-C₁₀ aralkyl, and n is an integer of 0 to 2; and more preferably, R and R₆ each are independently selected from methyl, ethyl, n-propyl, isopropyl, n-butyl, isobutyl, t-butyl, n-pentyl, isopentyl, phenyl, 2-hydroxyethyl or 3-hydroxypropyl, and n is 0 or 1.

Specifically, examples of alkoxysilane RₙSi(OR₆)₄₋ₙ may include but are not limited to: one or more of tetramethoxysilane, tetraethoxysilane, tetrapropoxysilane, tetraisopropoxysilane, tetra-n-butyloxysilane, tetraisobutyloxysilane, tetra-n-pentyloxysilane, tetraisopentyloxysilane, diethyloxydimethoxysilane, tetra(2-hydroxyethoxy)silane and tetra(3-hydroxypropoxy)silane, diphenyldimethoxysilane, diphenyldiethoxysilane, propyltrimethoxysilane, and propyltriethoxysilane.

In addition to the two or three types of electron donors described above, the catalyst component according to the present invention further comprises titanium, magnesium, and halogen. Preferably, the catalyst component is a reaction product obtained by loading a titanium-containing compound, a compound B and a compound C onto magnesium halide, or a reaction product obtained by loading a titanium-containing compound, a compound A, a compound B and a compound C onto magnesium halide. The magnesium halide preferably is magnesium dihalide in an activated state, more preferably activated magnesium dichloride. This type of magnesium dichloride is well-known in the art as a carrier for the Ziegler-Natta catalyst. Usually, this type of magnesium dichloride in an activated state is characterized in that, in an X-ray diffraction pattern, a strongest diffraction peak appearing in the diffraction pattern of non-active magnesium dichloride has a decreased intensity and expands into a halo.

According to the present invention, a preparation method of the activated magnesium dihalide is well-known in the art. Generally, the activated magnesium dihalide may be obtained by grinding non-active magnesium dihalide with a grinder; and the activated magnesium may also be prepared by reacting alkylmagnesium halide, alkylmagnesium, alkoxymagnesium, or non-active magnesium dihalide with a halide (such as aluminum halide, halosilane, or titanium halide) in a solvent system; the activated magnesium dihalide may also be obtained by reacting non-active magnesium dihalide with one or more of a ester, alcohol and ether electron donor compound to form a magnesium halide adduct, wherein the magnesium halide adduct selectively contains trace amount of water; then performing chemical reaction or heat treatment under a negative pressure to remove the coordinated electron donor, to thereby obtain the activated magnesium dihalide. According to different preparation methods of the activated magnesium dihalide, compared to the preparation of the olefin polymerization catalyst component, the activated magnesium dihalide may be prepared in advance or may be obtained simultaneously during the preparation process of the olefin polymerization catalyst component.

According to the present invention, the titanium containing compound is selected from one or more of titanium trihalide and a titanium compound represented by a general formula Ti(OR")₄₋ₘX"ₘ, in the formula, R" is any one of substituted or unsubstituted C₁-C₁₀ linear alkyl, or unsubstituted C₃-C₁₀ branched alkyl; and X" is halogen, and m is an integer of 0-4. Preferably, the titanium containing compound is selected from titanium tetrachloride, titanium tetrabromide, titanium tetraiodide, tetrabutoxy titanium, tetraethoxy titanium, tributyloxy titanium monochloride, dibutoxy titanium dichloride, butoxy titanium trichloride, triethoxy titanium chloride, diethoxy titanium dichloride, ethoxy titanium trichloride, or titanium trichloride. More preferably, the titanium containing compound is titanium tetrachloride.

The preparation of the olefin polymerization catalyst component of the present invention may be carried out according to various well-known methods. For example, a preparation method of a solid catalyst component set forth in CN1006071B may be used, firstly, a non-active magnesium halide was dissolved in a solvent system to form a solution; then the titanium containing compound, and the compound B and compound C of the present invention or the compound A, compound B and compound C of the present invention were added; and in the presence of an auxiliary precipitant, the olefin polymerization catalyst component containing an active center is re-precipitated by heating. The activated magnesium halide is generated simultaneously during the above reaction. The relevant disclosure of CN1006071B is hereby incorporated into the present invention by reference.

Alternatively, according to another method, the magnesium halide adduct may be firstly prepared, preferably, the magnesium halide adduct is represented by a general formula MgX¹X²·m(R‴OH)·nE·qH₂O, and the adduct particle is in a spherical shape, with m being 1.0-5.0, n being 0-1.0, and q being 0-0.8; X¹ and X² each are independently any one of chlorine or bromine; R‴ is any one of substituted or unsubstituted linear alkyl C₁-C₄ and substituted or unsubstituted C₃-C₄ branched alkyl; E is an electron donor compound, which may be an ether or ester. Preferably, m is 1.5-3.5 and n is 0-0.5. Then, the magnesium halide adduct particles are allowed to react with the titanium containing compound, compound B and compound C, or are allowed to react with the titanium containing compound, compound A, compound B and compound C, to obtain the catalyst component for olefin polymerization containing activated magnesium halide. The preparation of such an olefin polymerization catalyst component may be carried out in accordance with the methods disclosed in CN1036011C, CN1151183C, CN101565475A, CN101486776B, and CN102796213B, the related disclosures of which are hereby incorporated to the present invention by reference in their entireties.

In any preparation method, the compound A, compound B, and compound C may be selectively added before, during, or after the reaction of the magnesium halide or the magnesium halide adduct with the titanium containing compound; and they are preferably added during the reaction with the titanium containing compound. According to the present invention, the compound A, compound B, and compound C may also be added simultaneously or stepwise, and the compound A, compound B, and compound C each may be added in several portions, and the addition order of the compound A, compound B, and compound C is in no particular order.

In the preparation process of the catalyst component of the present invention, when the internal electron donor comprises the compound B and compound C, relative to one mole of magnesium, a molar ratio of the compound B, compound C, and titanium containing compound to the magnesium halide may be 0.01-0.5:0.005-0.4:5-100:1; preferably, the molar ratio of the compound B, compound C, and titanium containing compound to the magnesium halide is 0.05-0.35:0.01-0.25:15-90:1; and more preferably, the molar ratio of the compound B, compound C and titanium containing compound to the magnesium halide is 0.05-0.25: 0.015-0.15:25-80:1.

In the preparation process of the catalyst component of the present invention, when the internal electron donor comprises the compound A, compound B, and compound C, relative to one mole of magnesium, a molar ratio of the compound A, compound B, compound C, and titanium containing compound to the magnesium halide may be 0.005-0.4:0.01-0.5:0.005-0.4:5-100:1; preferably, the molar ratio of the compound A, compound B, compound C, and titanium containing compound to the magnesium halide is 0.01-0.25:0.05-0.35:0.01-0.25:15-90:1; and more preferably, the molar ratio of the compound A, compound B, compound C, and titanium containing compound to the magnesium halide is 0.02-0.18:0.05-0.25:0.015-0.15:25-80:1.

According to another aspect of the present invention, a catalyst system for olefin polymerization is provided, and the catalyst system comprises the following components or a reaction product of the following components:
a. the olefin polymerization catalyst component described above;
b. an alkyl aluminum compound; and
c. optionally, at least one external electron donor.

Compared with the catalyst systems for olefin polymerization in the prior art, the olefin polymerization catalyst system of the present invention, which uses the catalyst component according to the present invention, not only maintains a high polymerization activity, a good hydrogen sensitivity, and a high stereospecificity when used for olefin polymerization reaction, but also unexpectedly exhibits an excellent olefin copolymerization ability.

According to the olefin polymerization catalyst system of the present invention, the alkyl aluminum compound may be various commonly-used alkyl aluminum compounds in the art. For example, the alkyl aluminum compound may be one or more of alkyl aluminum sesquichloride and a compound represented by a general formula AlR^{I}R^{II}R^{III}, wherein the R^{I}, R^{II}, and R^{III} in the general formula each may independently be any one of chlorine, substituted or unsubstituted C₁-C₈ linear alkyl, and substituted or unsubstituted C₃-C₈ branched alkyl, and at least one of R^{I}, R^{II}, and R^{III} is any one of substituted or unsubstituted C₁-C₈ linear alkyl or a substituted or unsubstituted C₃-C₈ branched alkyl. Preferably, the alkyl aluminum compound is one or more of triethyl aluminum, triisobutyl aluminum, tri-n-butyl aluminum, tri-n-hexyl aluminum, tri-n-octyl aluminum, monochlorodiethyl aluminum, monochlorodiisobutyl aluminum, monochlorodi-n-butyl aluminum, monochlorodi-n-hexyl aluminum, dichloromonoethyl aluminum, dichloromonoisobutyl aluminum, dichloromono-n-butyl aluminum, dichloro-monon-hexyl aluminum, and Al₂Et₃Cl₃.

Generally, in the catalyst system for olefin polymerization according to the present invention, a molar ratio of the alkyl aluminum compound calculated by aluminum element to the catalyst component calculated by titanium element may be 1-2000:1, preferably 20-700:1.

According to the olefin polymerization catalyst system of the present invention, the external electron donor compound may be various commonly-used electron donor compounds in the art. For example, the external electron donor compound may be one or more of a carboxylic acid, anhydride, ester, ketone, ether, alcohol, organophosphorus, and organosilicon compound; and preferably an organosilicon compound.

According to the olefin polymerization catalyst system of the present invention, the external electron donor is more preferably an organosilicon compound represented by a general formula R^{a}ₓR^{b}_{y}Si(OR^{c})_{z}, and in the general formula, R^{a}, R^{b}, and R^{c} each are independently substituted or unsubstituted C₁-C₁₈ hydrocarbyl with or without a heteroatom; and x and y each are independently an integer of 0-2, z is an integer of 1-3, and x+y+z=4. Further preferably, in the general formula R^{a}ₓR^{b}_{y}Si(OR^{c})_{z}, at least one of R^{a} and R^{b} is selected from substituted or unsubstituted branched C₃-C₁₀ alkyl with or without a heteroatom, substituted or unsubstituted C₃-C₁₀ cycloalkyl with or without a heteroatom, and substituted or unsubstituted C₆-C₁₀ aryl, R^{c} is selected from substituted or unsubstituted C₁-C₁₀ linear alkyl and substituted or unsubstituted C₃-C₁₀ branched alkyl, preferably methyl, x is 1, y is 1, and z is 2; or, R^{b} is substituted or unsubstituted C₃-C₁₀ branched alkyl or substituted or unsubstituted C₃-C₁₀ cycloalkyl, R^{c} is methyl, x is 0, y is 1, and z is 3.

Specifically, examples of the organosilicon compound may be, but are not limited to: cyclohexylmethyldimethoxysilane, diisopropyldimethoxysilane, n-butylcyclohexyldimethoxysilane, diisobutyldimethoxysilane, diphenyldimethoxysilane, methyl-t-butyldimethoxysilane, dicyclopentyldimethoxysilane, 2-ethylpiperidyl-2-t-butyldimethoxysilane, (1,1,1-trifluoro-2-propyl)-2-ethylpiperidyldimethoxysilane, (1,1,1-trifluoro-2-propyl)-methyldimethoxysilane, cyclohexyltrimethoxysilane, t-butyl trimethoxysilane, and t-hexyltrimethoxysilane.

Generally, in the catalyst system for olefin polymerization according to the present invention, the dosage of the external electron donor compound is 0.005-0.5 moles, preferably 0.01-0.4 moles, relative to 1 mole of alkyl aluminum compound calculated by aluminum element.

In the present invention, the alkyl aluminum compound and the optional external electron donor compound may react with the catalyst component alone or react with the catalyst component as a mixture of the two components.

The above olefin polymerization catalyst system according to the present invention is suitable as a catalyst system for olefin polymerization.

According to yet another aspect of the present invention, there is provided a prepolymerization catalyst composition for olefin polymerization, which comprises:
a. the above olefin polymerization catalyst system, which is subjected to an olefin prepolymerization reaction step;
b. a prepolymer obtained from the olefin prepolymerization reaction step.

According to the present invention, the term "prepolymerization catalyst composition" refers to a catalyst composition which is subjected to the polymerization step and contains an olefin polymer with a lower prepolymerization multiple as compared to the catalyst component. Generally, the prepolymerization multiple is 0.1-1000 g olefin polymer/g catalyst component. Preferably, the prepolymerization multiple is 0.2-500 g olefin polymer/g catalyst component, and further preferably 0.5-100 g olefin polymer/g catalyst component. In the present invention, an olefin used for prepolymerization may be the same as the olefin used for polymerization, and the olefin is preferably propylene or a mixture of propylene with one or more non-propylene α-olefins having a molar content of up to 20%.

According to the prepolymerization catalyst composition of the present invention, the prepolymerization reaction step may be carried out online as part of a continuous polymerization process or may be independently carried out through intermittent operations.

The prepolymerization reaction conditions of the present invention may be well-known conditions, with a prepolymerization temperature of 0-50°C, preferably 10-30°C.

According to yet another aspect of the present invention, there is provided an olefin polymerization method, which comprises contacting one or more olefins with at least one of the olefin polymerization catalyst system and the prepolymerization catalyst composition provided by the present invention under olefin polymerization conditions.

According to the olefin polymerization method of the present invention, a polymer having high ethylene content and high rubber content and having a perfect particle morphology can be prepared by using the olefin polymerization catalyst system or prepolymerization catalyst composition according to the present invention. In the olefin polymerization method of the present invention, there is no specific limitation on the olefin polymerization conditions and the olefins used.

Generally, according to the olefin polymerization method of the present invention, the olefin may be an olefin represented by a general formula CH₂=CHR', wherein R' may be one of hydrogen, substituted or unsubstituted C₁-C₁₂ linear alkyl, substituted or unsubstituted C₃-C₁₂ branched alkyl, and substituted or unsubstituted C₆-C₁₂ aryl. According to the olefin polymerization method of the present invention, if necessary, the olefin may also contain a small amount of diene. According to the olefin polymerization method of the present invention, the olefin is preferably propylene, or a mixture of propylene and the olefin represented by CH₂=CHR', wherein R' is one of hydrogen, substituted or unsubstituted C₁-C₆ linear alkyl, and substituted or unsubstituted C₃-C₆ branched alkyl.

According to the olefin polymerization method of the present invention, the polymerization of olefins may be homopolymerization, and may also be copolymerization. The polymerization of olefins may be carried out according to well-known methods in the art, for example, the polymerization may be bulk polymerization, gas-phase polymerization, slurry polymerization, or liquid-phase bulk-gas-phase combined polymerization. According to the olefin polymerization method of the present invention, the olefin polymerization temperature may be a conventional temperature in the art, for example, the polymerization temperature may be 0°C-150°C, preferably 60°C-90°C; and a pressure for the polymerization reaction may be atmospheric or pressurized.

Compared with the prior art, the present invention has the following beneficial effects:
Compared to a case where the ester compound or diether compound is used alone, the present invention, in which the ester compound or diether compound are compounded with the alkoxysilane compound as the internal electron donor, exhibits a significantly improved olefin copolymerization ability while maintaining a high stereospecificity; and compared to a case where the alkoxysilane compound is used alone, the present invention exhibits a high stereospecificity and olefin copolymerization ability.

In the present invention, when the alkoxysilane compound is compounded with the hydroxybenzoyl compound and ester compound, or is compounded with the hydroxybenzoyl compound and diether compound as the internal electron donor, the prepared catalyst further improves the hydrogen adjustment sensitivity and olefin copolymerization ability of the catalyst while maintaining a high stereospecificity.

The polymer particles obtained by catalyzing olefins with the catalyst system and the prepolymerization catalyst composition of the present invention have a good particle morphology and a high sphericity.

### Detailed Description of the Embodiments

The present invention will be further illustrated through the following examples, but the examples are not intended to limit the scope of the present invention.

In the following examples, the test methods involved are as follows:
1. Polymer Melt Index (M.I): determined according to ASTM D1238-99.
2. Polymer isotactic index (II): determined by n-hexane extraction method (extraction with boiling n-hexane for 6 hours), that is, 2 g of dried polymer sample was placed in a Soxhlet extractor and extracted with boiling n-hexane for 6 hours; then the residue is dried to constant weight, and a ratio of the weight of the resultant residue to 2 is taken as the isotactic index.
3. Content of xylene-soluble substances (X.S): a copolymer was placed in a vacuum drying oven and baked at 75°C for 30 min, then quickly placed in a dryer and cooled to room temperature; about 2 g of the copolymer was taken and placed in a 500 ml conical flask, 200 ml of xylene was added and heated for dissolution, the dissolved sample was cooled at room temperature for 12-14 min and then placed in a constant temperature water bath at 25°C for crystallization for 60 minutes, and after the crystallized product was filtered, the soluble substances were heated, baked and weighed to calculate the content thereof.
4. Ethylene content: measured by Magna-IR760 infrared spectrometer from Nicolet compony, hot pressing film formation method, 170°C, 20 MPa.
5. Spectrophotometry is used to determine the content of titanium in the catalyst component.
6. Polymer sieving and average sphericity (SPHT) testing: a Camsizer instrument from Retsch Technology is used for testing, the closer the SPHT value is to 1, the closer the particles are to a spherical shape.

### Example 1

### (1) Preparation of olefin polymerization catalyst component

To a 300 mL glass reaction flask provided with a stirrer and purged with high-purity nitrogen gas, 90 mL of titanium tetrachloride and 18 mL of anhydrous hexane were added, and cooled to -20°C, then 8.0 g of spherical magnesium chloride adduct MgCl₂·2.7CH₃CH₂OH·0.02E (E is ethyl o-methoxybenzoate) (see CN101486722A for the preparation method thereof) was added, and the resultant was stirred at -20°C for 30 min. Then, the temperature was slowly increased to 110°C, and 1.5 mL of diisobutyl phthalate and 0.4 mL of tetraethoxysilicon were added during the temperature increasing process. After the resultant was subjected to constant temperature reaction at 110°C for 30 min, the liquid was filtered out. 80 mL of titanium tetrachloride was added, the resultant was heated to 120°C, and maintained at 120°C for 30 min, and then the liquid was filtered out; and the above operations were repeated once again. Finally, the obtained solid was washed 5 times with 60°C hexane (with a dosage of 80 mL hexane/each time); and the obtained solid product was subjected to vacuum drying to obtain a spherical catalyst component. The content of titanium in the catalyst component was 2.4 wt%.

### (2) Homopolymerization of olefins

Liquid phase bulk polymerization of propylene was carried out in a 5 L stainless steel high-pressure reaction kettle. 5 mL of a solution of triethylaluminum in hexane (with a concentration of 0.5 mmol/mL), 1 mL of a solution cyclohexylmethyldimethoxysilane in hexane (with a concentration of 0.1 mmol/mL), and 9 mg of the above spherical catalyst component were sequentially added to the reaction kettle under protection of nitrogen gas. The high-pressure reaction kettle was closed, and 6.5 L of hydrogen gas (standard volume) and 2.3 L of liquid propylene were added. The resultant was heated to 70°C and allowed to react for 1 hour. Then, the resultant was cooled, depressurized, discharged, and dried to obtain polypropylene. The polymerization results were shown in Table 1, and the polymer sieving results were shown in Table 7.

### (3) Copolymerization of olefins

The copolymerization was carried out in a 400 mL stainless steel high-pressure reaction kettle. After the reaction kettle was sufficiently replaced with gas-phase propylene, 100 g of propylene and 800 mL of hydrogen gas (controlled by a gas mass flow meter) were added, and heated to 20°C; and to which a precomplexed mixture of triethylaluminum, cyclohexylmethyldimethoxysilane, and catalyst (aluminum:propylene=0.13 g/kg, aluminum:silicon=16 mol/mol, and the catalyst=1 mg) were automatically injected via a mechanical arm, and stirring and timing were started. After 10 min of prepolymerization, the temperature was rapidly increased to 69°C for bulk polymerization. After 100 min, the remaining propylene in the kettle was emptied, and an ethylene/propylene mixture gas pre-prepared in proportion (ethylene: propylene=2:3 mol/mol) was quickly added, the temperature was rapidly increased to 80°C, wherein the propylene/ethylene ratio was real-time regulated and controlled by gas chromatography during gas-phase polymerization. After 30 min of reaction, a termination gas was introduced, the heating was stopped, the stirring was stopped, and the obtained polymer was depressurized, discharged, and dried to obtain polypropylene.

### Example 2

### (1) Preparation of olefin polymerization catalyst component

A spherical catalyst component was prepared by using the same method as Example 1 (1), except that the amount of tetraethoxysilicon was changed to 1.25 mL. The content of titanium in the catalyst component was 2.5 wt%.

### (2) Homopolymerization of olefins

The polymerization of propylene was carried out by using the same method as in Example 1 (2), except that the catalyst component was the catalyst component prepared in above step (1) of this example. The polymerization results were shown in Table 1.

### (3) Copolymerization of olefins

The copolymerization of olefins was carried out by using the same method as in Example 1 (3), except that the catalyst component was the catalyst component prepared in above step (1) of this example. The polymerization results were shown in Table 2.

### Comparative Example 1

### (1) Preparation of olefin polymerization catalyst component

A spherical catalyst component was prepared by using the same method as Example 1 (1), except that the tetraethoxysilicon was not used. The content of titanium in the catalyst component was 2.3 wt%.

### (2) Homopolymerization of olefins

The polymerization of propylene was carried out by using the same method as in Example 1 (2), except that the catalyst component was the catalyst component prepared in above step (1) of this comparative example. The polymerization results were shown in Table 1, and the polymer sieving results were shown in Table 7.

### (3) Copolymerization of olefins

The copolymerization of olefins was carried out by using the same method as in Example 1 (3), except that the catalyst component was the catalyst component prepared in above step (1) of this comparative example. The polymerization results were shown in Table 2.

### Comparative Example 2

### (1) Preparation of olefin polymerization catalyst component

A spherical catalyst component was prepared by using the same method as Example 1 (1), except that the diisobutyl phthalate was not used. The content of titanium in the catalyst component was 3.5 wt%.

### (2) Homopolymerization of olefins

The polymerization of propylene was carried out by using the same method as in Example 1 (2), except that the catalyst component was the catalyst component prepared in above step (1) of this comparative example. The polymerization results were shown in Table 1, and the polymer sieving results were shown in Table 7.

### (3) Copolymerization of olefins

The copolymerization of olefins was carried out by using the same method as in Example 1 (3), except that the catalyst component was the catalyst component prepared in above step (1) of this comparative example. The polymerization results were shown in Table 2.

### Example 3

### (1) Preparation of olefin polymerization catalyst component

To a 300 mL glass reaction flask provided with a stirrer and purged with high-purity nitrogen gas, 90 mL of titanium tetrachloride and 18 mL of anhydrous hexane were added, and cooled to -20°C, then 8.0 g of spherical magnesium chloride adduct MgCl₂·2.7CH₃CH₂OH·0.02E (E is ethyl o-methoxybenzoate) (see CN101486722A for the preparation method thereof) was added, and the resultant was stirred at -20°C for 30 min. Then, the temperature was slowly increased to 110°C, and 0.4 mL of ethyl 2-hydroxybenzoate, 1.5 mL of diisobutyl phthalate, and 0.2 mL of tetraethoxysilicon were added during the temperature increasing process. After the resultant was subjected to constant temperature reaction at 110°C for 30 min, the liquid was filtered out. 80 mL of titanium tetrachloride was added, the resultant was heated to 120°C, and maintained at 120°C for 30 min, and then the liquid was filtered out; and the above operations were repeated once again. Finally, the obtained solid was washed 5 times with 60°C hexane (with a dosage of 80 mL hexane/each time); and the obtained solid product was subjected to vacuum drying to obtain a spherical catalyst component. The content of titanium in the catalyst component was 2.2 wt%.

### (2) Homopolymerization of olefins

Liquid phase bulk polymerization of propylene was carried out in a 5 L stainless steel high-pressure reaction kettle. 5 mL of a solution of triethylaluminum in hexane (with a concentration of 0.5 mmol/mL), 1 mL of a solution cyclohexylmethyldimethoxysilane in hexane (with a concentration of 0.1 mmol/mL), and 9 mg of the above spherical catalyst component were sequentially added to the reaction kettle under protection of nitrogen gas. The high-pressure reaction kettle was closed, and 6.5 L of hydrogen gas (standard volume) and 2.3 L of liquid propylene were added. The resultant was heated to 70°C and allowed to react for 1 hour. Then, the resultant was cooled, depressurized, discharged, and dried to obtain polypropylene. The polymerization results were shown in Table 3.

### (3) Copolymerization of olefins

The copolymerization was carried out in a 400 mL stainless steel high-pressure reaction kettle. After the reaction kettle was sufficiently replaced with gas-phase propylene, 100 g of propylene and 800 mL of hydrogen gas (controlled by a gas mass flow meter) were added, and heated to 20°C; and to which a precomplexed mixture of triethylaluminum, cyclohexylmethyldimethoxysilane, and catalyst (aluminum:propylene=0.13 g/kg, aluminum:silicon=16 mol/mol, and the catalyst=1 mg) were automatically injected via a mechanical arm, and stirring and timing were started. After 10 min of prepolymerization, the temperature was rapidly increased to 69°C for bulk polymerization. After 100 min, the remaining propylene in the kettle was emptied, and an ethylene/propylene mixture gas pre-prepared in proportion (ethylene: propylene=2:3 mol/mol) was quickly added, the temperature was rapidly increased to 80°C, wherein the propylene/ethylene ratio was real-time regulated and controlled by gas chromatography during gas-phase polymerization. After 30 min of reaction, a termination gas was introduced, the heating was stopped, the stirring was stopped, and the obtained polymer was depressurized, discharged, and dried to obtain polypropylene. The polymerization results were shown in Table 4.

### Example 4

### (1) Preparation of olefin polymerization catalyst component

A spherical catalyst component was prepared by using the same method as Example 3 (1), except that the amount of tetraethoxysilicon was 0.4 mL. The content of titanium in the catalyst component was 2.4 wt%.

### (2) Homopolymerization of olefins

The polymerization of propylene was carried out by using the same method as in Example 3 (2), except that the catalyst component was the catalyst component prepared in above step (1) of this example. The polymerization results were shown in Table 3, and the polymer sieving results were shown in Table 7.

### (3) Copolymerization of olefins

The copolymerization of olefins was carried out by using the same method as in Example 3 (3), except that the catalyst component was the catalyst component prepared in above step (1) of this example. The polymerization results were shown in Table 4.

### Example 5

### (1) Preparation of olefin polymerization catalyst component

A spherical catalyst component was prepared by using the same method as Example 3 (1), except that the amount of tetraethoxysilicon was 1.0 mL. The content of titanium in the catalyst component was 2.2 wt%.

### (2) Homopolymerization of olefins

The polymerization of propylene was carried out by using the same method as in Example 3 (2), except that the catalyst component was the catalyst component prepared in above step (1) of this example. The polymerization results were shown in Table 3.

### (3) Copolymerization of olefins

The copolymerization of olefins was carried out by using the same method as in Example 3 (3), except that the catalyst component was the catalyst component prepared in above step (1) of this example. The polymerization results were shown in Table 4.

### Comparative Example 3

### (1) Preparation of olefin polymerization catalyst component

A spherical catalyst component was prepared by using the same method as Example 4 (1), except that the tetraethoxysilicon was not used. The content of titanium in the catalyst component was 2.3 wt%.

### (2) Homopolymerization of olefins

The polymerization of propylene was carried out by using the same method as in Example 4 (2), except that the catalyst component was the catalyst component prepared in above step (1) of this comparative example. The polymerization results were shown in Table 3, and the polymer sievingg results were shown in Table 7.

### (3) Copolymerization of olefins

The copolymerization of olefins was carried out by using the same method as in Example 4 (3), except that the catalyst component was the catalyst component prepared in above step (1) of this comparative example. The polymerization results were shown in Table 4.

### Comparative Example 4

### (1) Preparation of olefin polymerization catalyst component

A spherical catalyst component was prepared by using the same method as Example 1 (1), except that the diisobutyl phthalate was not used. The content of titanium in the catalyst component was 7.3 wt%.

### (2) Homopolymerization of olefins

The polymerization of propylene was carried out by using the same method as in Example 4 (2), except that the catalyst component was the catalyst component prepared in above step (1) of this comparative example. The polymerization results were shown in Table 3, and the polymer sieving results were shown in Table 7.

### (3) Copolymerization of olefins

The copolymerization of olefins was carried out by using the same method as in Example 4 (3), except that the catalyst component was the catalyst component prepared in above step (1) of this comparative example. The polymerization results were shown in Table 4.

### Comparative Example 5

### (1) Preparation of olefin polymerization catalyst component

A spherical catalyst component was prepared by using the same method as Example 4 (1), except that 0.4 mL of ethyl 2-hydroxybenzoate was changed to 0.4 mL of (2-hydroxyethyl) methacrylate, and the diisobutyl phthalate was not used. The content of titanium in the catalyst component was 4.3 wt%.

### (2) Homopolymerization of olefins

The polymerization of propylene was carried out by using the same method as in Example 4 (2), except that the catalyst component was the catalyst component prepared in above step (1) of this comparative example. The polymerization results were shown in Table 3, and the polymer sieving results were shown in Table 7.

### (3) Copolymerization of olefins

The copolymerization of olefins was carried out by using the same method as in Example 4 (3), except that the catalyst component was the catalyst component prepared in above step (1) of this comparative example. The polymerization results were shown in Table 4.

### Example 6

### (1) Preparation of olefin polymerization catalyst component

A spherical catalyst component was prepared by using the same method as Example 3 (1), except that 1.5 mL of diisobutyl phthalate was changed to 1.2 mL of 2-isopropyl-2-isopentyl-1,3-dimethoxypropane. The content of titanium in the catalyst component was 2.5 wt%.

### (2) Homopolymerization of olefins

The polymerization of propylene was carried out by using the same method as in Example 3 (2), except that the catalyst component was the catalyst component prepared in above step (1) of this example. The polymerization results were shown in Table 5.

### (3) Copolymerization of olefins

The copolymerization of olefins was carried out by using the same method as in Example 3 (3), except that the catalyst component was the catalyst component prepared in above step (1) of this example. The polymerization results were shown in Table 6.

### Example 7

### (1) Preparation of olefin polymerization catalyst component

A spherical catalyst component was prepared by using the same method as Example 6 (1), except that the amount of tetraethoxysilicon was changed to 0.4 mL. The content of titanium in the catalyst component was 2.5 wt%.

### (2) Homopolymerization of olefins

The polymerization of propylene was carried out by using the same method as in Example 6 (2), except that the catalyst component was the catalyst component prepared in above step (1) of this example. The polymerization results were shown in Table 5, and the polymer sieving results were shown in Table 7.

### (3) Copolymerization of olefins

The copolymerization of olefins was carried out by using the same method as in Example 6 (3), except that the catalyst component was the catalyst component prepared in above step (1) of this example. The polymerization results were shown in Table 6.

### Comparative Example 6

### (1) Preparation of olefin polymerization catalyst component

A spherical catalyst component was prepared by using the same method as Example 6 (1), except that the tetraethoxysilicon was not used. The content of titanium in the catalyst component was 2.6 wt%.

### (2) Homopolymerization of olefins

The polymerization of propylene was carried out by using the same method as in Example 6 (2), except that the catalyst component was the catalyst component prepared in above step (1) of this comparative example. The polymerization results were shown in Table 5.

### (3) Copolymerization of olefins

The copolymerization of olefins was carried out by using the same method as in Example 6 (3), except that the catalyst component was the catalyst component prepared in above step (1) of this comparative example. The polymerization results were shown in Table 6.

**Table 1**

| Example | Polymerization activity (KgPP/gCat) | Isotactic index (wt%) | Polymer melt index (g/10min) |
|---|---|---|---|
| Example 1 (2) | 45.0 | 96.8 | 33.8 |
| Example 2 (2) | 42.1 | 96.6 | 36.0 |
| Comparative Example 1 (2) | 43.2 | 96.9 | 32.7 |
| Comparative Example 2 (2) | 25.2 | 71.0 | 215.0 |

**Table 2**

| Example | Polymerization activity KgPP/gCat | Polymer X.S wt% | Ethylene content wt% | Polymer MI g/10min |
|---|---|---|---|---|
| Example 1 (3) | 73.4 | 14.3 | 6.3 | 24.9 |
| Example 2 (3) | 62.7 | 13.8 | 5.9 | 26.6 |
| Comparative Example 1 (3) | 57.1 | 8.4 | 4.0 | 29.3 |
| Comparative Example 2 (3) | 38.1 | 27.4 | 5.3 | 157.0 |

The polymerization results of the catalyst components, the catalyst systems, and the prepolymerization catalyst compositions obtained from the Examples 1-2 and Comparative Examples 1-2 for olefin polymerization were shown in Tables 1 and 2, respectively. It can be seen from table 1 that, compared to existing similar catalyst technologies, the catalyst systems and the prepolymerization catalyst compositions of the present invention prepared by the catalyst components of the present invention containing the electron donor compounds B and C, still exhibited a high polymerization activity, a good hydrogen adjustment sensitivity, and a high stereospecificity when they are used for olefin homopolymerization under the same hydrogen partial pressure condition. It was shown in Comparative Example 2 that, when the catalyst components only contained the electron donor compound C, the catalyst systems and the prepolymerization catalyst compositions had a too-low stereospecificity, and thus had no practical application value in the olefin industry applications. The data in Table 2 showed that, when the catalyst systems of the present invention and the prepolymerization catalyst compositions of the present invention prepared by the catalyst components of the present invention containing both the electron donor B and the electron donor C were used to catalyze copolymerization of ethylene and propylene, the ethylene content in the resin was significantly increased, indicating that the catalyst components of the present invention as well as the catalyst systems and the prepolymerization catalyst compositions prepared by the catalyst components of the present invention had a significantly improved olefin copolymerization ability.

**Table 3**

| Example | Polymerization activity KgPP/gCat | Isotactic index wt% | Polymer MI g/10min |
|---|---|---|---|
| Example 3 (2) | 46.1 | 97.1 | 40.2 |
| Example 4 (2) | 45.8 | 96.9 | 42.5 |
| Example 5 (2) | 50.3 | 96.7 | 43.7 |
| Comparative Example 3 (2) | 47.2 | 97.0 | 39.6 |
| Comparative Example 4 (2) | 19.4 | 73.2 | 183.6 |
| Comparative Example 5 (2) | 32.3 | 83.6 | 114.3 |

**Table 4**

| Example | Polymerization activity KgPP/gCat | Polymer X.S wt% | Ethylene content wt% | Polymer MI g/10min |
|---|---|---|---|---|
| Example 3 (3) | 75.3 | 16.4 | 7.5 | 17.4 |
| Example 4 (3) | 80.4 | 18.9 | 8.1 | 15.1 |
| Example 5 (3) | 68.7 | 14.6 | 6.8 | 18.2 |
| Comparative Example 3 (3) | 59.0 | 9.7 | 4.3 | 26.7 |
| Comparative Example 4 (3) | 28.7 | 27.7 | 6.5 | 117.5 |
| Comparative Example 5 (3) | 50.5 | 19.0 | 6.0 | 56.0 |

The polymerization results of the catalyst components, the catalyst systems, and the prepolymerization catalyst compositions obtained from the Examples 3-5 and Comparative Examples 3-5 for olefin polymerization were shown in Tables 3 and 4, respectively. Similar to the results shown in Table 1, it can be seen from Table 3 that, compared to existing similar catalyst technologies, the catalyst systems and the prepolymerization catalyst compositions of the present invention prepared by the catalyst components of the present invention containing all of the electron donor compounds A, B and C, still exhibited a high polymerization activity, a good hydrogen adjustment sensitivity, and a high stereospecificity when they are used for olefin homopolymerization under the same hydrogen partial pressure condition. Among them, compared to the catalyst systems and the prepolymerization catalyst compositions prepared by the catalyst components without containing the electron donor compound A, the catalyst systems and the prepolymerization catalyst compositions of the present invention prepared by the catalyst components containing all of the electron donor compound s A, B, and C had the hydrogen adjustment sensitivity improved to a certain extent. Significantly, it can also be seen from table 4 that, compared to existing similar catalyst technologies, when the catalyst systems of the present invention and the prepolymerization catalyst compositions of the present invention prepared by the catalyst components of the present invention containing all of the electron donor compounds A, B, and C were used to catalyze the copolymerization of ethylene and propylene, the ethylene content in the resin was significantly increased, indicating that the catalyst components of the present invention containing the electron donor compounds A, B, and C as well as the catalyst systems and the prepolymerization catalyst compositions prepared by the catalyst components also had a significantly improved olefin copolymerization ability, and had a stronger olefin copolymerization ability as compared to the catalyst systems of the present invention and the prepolymerization catalyst compositions of the present invention without containing the electron donor compound A. It should be noted that, it was shown in Comparative Examples 4 and 5 that, when the catalyst components contained both the electron donor compound A and the electron donor compound C, the further prepared catalyst systems and the prepolymerization catalyst compositions had a too-low stereospecificity, and thus had no practical application value in the olefin industry applications.

In addition, it can be seen from Table 7 that, when the catalyst systems and the prepolymerization catalyst compositions containing only electron donor compound C or containing both the electron donor compound A and the electron donor compound C in Comparative Examples 2, 4, and 5 were used for polymerization of propylene, the obtained polymer were severely broken, contained a large amount of fine powder, and sometimes were accompanied by a severe agglomeration phenomenon; whereas, when the catalyst systems of the present invention and the prepolymerization catalyst compositions of the present invention containing the catalyst components of the present invention were used for propylene polymerization, the obtained polymer particles had a good morphology and a high sphericity, and contained a very little amount of fine powder.

**Table 5**

| Example | Polymerization activity (KgPP/gCat) | Isotactic index (wt%) | Polymer melt index (g/10min) |
|---|---|---|---|
| Example 6 (2) | 56.0 | 97.3 | 77.4 |
| Example 7 (2) | 58.0 | 97.2 | 75.8 |
| Comparative Example 6 (2) | 56.3 | 97.6 | 75.0 |

**Table 6**

| Example | Polymerization activity KgPP/gCat | Polymer X.S wt% | Ethylene content wt% | Polymer MI g/10min |
|---|---|---|---|---|
| Example 6 (3) | 85.1 | 9.6 | 5.5 | 40.1 |
| Example 7 (3) | 89.3 | 11.0 | 5.9 | 37.3 |
| Comparative Example 6 (3) | 86.9 | 7.6 | 3.5 | 49.8 |

The polymerization results of the catalyst components, the catalyst systems, and the prepolymerization catalyst compositions obtained from the Examples 6-7 and Comparative Example 6 for olefin polymerization were shown in Tables 5 and 6, respectively. It may also be clearly seen from Tables 5 and 6 that, in the present invention, when the alkoxysilane compound was compounded with the 2-hydroxybenzoyl compound, 1,3-diether compound as the internal electron donor, the obtained catalyst systems of the present invention and the obtained prepolymerization catalyst compositions of the present invention containing the catalyst components of the present invention also exhibited an excellent comprehensive performance, that is, compared with existing similar catalyst technologies, the catalyst systems of the present invention and the prepolymerization catalyst compositions of the present invention containing the catalyst components of the present invention exhibited a significantly improved olefin copolymerization ability while maintaining a high polymerization activity, a good hydrogen adjustment sensitivity, and a high stereospecificity. Similarly, in the present invention, when the catalyst components, the catalyst systems and the prepolymerization catalyst compositions containing the internal electron donor obtained by compounding the alkoxysilane compound with the 2-hydroxybenzoyl compound, 1,3-diether compound were used for olefin polymerization, the obtained polymer particles had a good morphology and high sphericity, and contained a very little amount of fine powder.

**Table 7**

| Example | Particle size distribution/wt% | | | | | | | | SPHT |
|---|---|---|---|---|---|---|---|---|---|
| | >5.0 mm | 3.2-5.0 mm | 2.0-3.2 mm | 1.5-2.0 mm | 1.0-1.5 mm | 0.5-1.0 mm | 0.25-0.5 mm | <0.25 mm | |
| Example 1 (2) | 0.2 | 10.7 | 47.2 | 25.6 | 12.6 | 3.2 | 0.4 | 0.1 | 0.899 |
| Comparative Example 1 (2) | 0 | 3.0 | 37.6 | 29.6 | 20.1 | 6.5 | 1.5 | 1.7 | 0.848 |
| Comparative Example 2 (2) | 0 | 1.5 | 3.6 | 8.7 | 22.7 | 45.1 | 13.4 | 5.0 | 0.735 |
| Example 4 (2) | 0 | 7.9 | 44.7 | 28.2 | 15.0 | 3.7 | 0.4 | 0.1 | 0.917 |
| Comparative Example 3 (2) | 0 | 3.1 | 24.2 | 26.1 | 28.9 | 15.5 | 1.6 | 0.6 | 0.852 |
| Comparative Example 4 (2) | 7.1 | 4.3 | 3.9 | 9.1 | 26.9 | 37.0 | 10.0 | 1.7 | 0.747 |
| Comparative Example 5 (2) | 0 | 0.2 | 2.6 | 7.2 | 23.5 | 41.2 | 18.7 | 6.6 | 0.752 |
| Example 7 (2) | 0 | 5.8 | 45.9 | 31.0 | 15.3 | 1.9 | 0 | 0.1 | 0.909 |

It should be noted that, the endpoints of ranges and any values disclosed herein are not limited to the exact ranges or values, and these ranges or values should be understood to encompass values approximate to these ranges or values. With regard to numerical ranges, the endpoint values of individual ranges; the endpoint values of individual ranges and individual point values; as well as individual point values, may each be combined with each other to obtain one or more new numerical ranges, which should be considered to be specifically disclosed herein.

The above examples are only used for explaining the present invention, but do not constitute any limitation to the present invention. The present invention has been described by referring to typical examples, but it should be understood that, the words used herein are descriptive and explanatory vocabularies, rather than restrictive vocabularies. Modifications may be made to the present invention as required within the scope of the claims of the present invention, and revisions may be made to the present invention without departing from the scope and spirit of the present invention. Although the present invention described herein relates to specific methods, materials, and examples, it does not mean that the present invention is limited to the specific examples disclosed herein, on the contrary, the present invention may be extended to all the other methods and applications with the same functionality.

## Claims

1. An olefin polymerization catalyst component, **characterized in that**, the olefin polymerization catalyst component comprises magnesium, titanium, halogen, and an internal electron donor, and the internal electron donor comprises a compound B and a compound C, wherein,
the compound B is selected from one or more of an ester compound other than a hydroxybenzoyl compound represented by formula (I) and an ether compound; 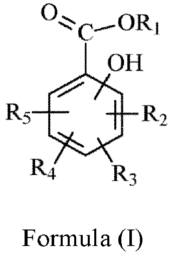
in formula (I), R₁ is selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; R₂, R₃, R₄, and R₅ each are independently selected from hydrogen, halogen, nitro, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; or, two or more groups of R₂, R₃, R₄, and R₅ are bonded with each other to form a ring; and
the compound C is selected from an alkoxysilane represented by formula RₙSi(OR₆)₄₋ₙ; and in formula RₙSi(OR₆)₄₋ₙ, R and R₆ each are independently selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl, and n is an integer of 0 to 3.

2. An olefin polymerization catalyst component, **characterized in that**, the olefin polymerization catalyst component comprises: magnesium, titanium, halogen, and an internal electron donor, and the internal electron donor comprises a compound A, a compound B and a compound C, wherein,
the compound A is selected from a hydroxybenzoyl compound represented by formula (I), 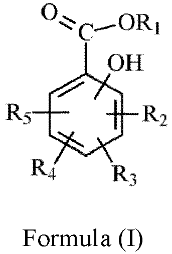
in formula (I), R₁ is selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; R₂, R₃, R₄, and R₅ each are independently selected from hydrogen, halogen, nitro, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; or, two or more groups of R₂, R₃, R₄, and R₅ are bonded with each other to form a ring;
the compound B is selected from one or more of an ester compound other than the compound A and an ether compound; and
the compound C is selected from an alkoxysilane represented by formula RₙSi(OR₆)₄₋ₙ; and in formula RₙSi(OR₆)₄₋ₙ, R and R₆ each are independently selected from hydrogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl, and n is an integer of 0 to 3.

3. The olefin polymerization catalyst component of claim 1 or 2, **characterized in that**, in formula (I), R₁ is selected from hydrogen, substituted or unsubstituted C₁-C₆ linear alkyl, substituted or unsubstituted C₃-C₆ branched alkyl, substituted or unsubstituted C₃-C₆ cycloalkyl, substituted or unsubstituted C₆-C₁₀ aryl, and substituted or unsubstituted C₇-C₁₀ aralkyl; and R₂, R₃, R₄, and R₅ each are independently selected from hydrogen, substituted or unsubstituted C₁-C₈ linear alkyl, substituted or unsubstituted C₃-C₈ branched alkyl, substituted or unsubstituted C₃-C₆ cycloalkyl, substituted or unsubstituted C₆-C₁₀ aryl, and substituted or unsubstituted C₇-C₁₀ aralkyl;
preferably, in formula (I), R₁ is selected from methyl, ethyl, n-propyl, isopropyl, n-butyl, isobutyl, t-butyl, n-pentyl, n-hexyl, benzyl, or phenylethyl; and R₂, R₃, R₄, and R₅ each are independently selected from hydrogen, methyl, ethyl, n-propyl, isopropyl, n-butyl, isobutyl, t-butyl, n-pentyl, isopentyl, cyclopentyl, n-hexyl, n-heptyl, or tolyl.

4. The olefin polymerization catalyst component of any one of claims 1-3, **characterized in that**, the hydroxybenzoyl compound represented by formula (I) is selected from one or more of a 4-hydroxybenzoic acid compound, a 4-hydroxybenzoate compound, a 2-hydroxybenzoic acid compound, and a 2-hydroxybenzoate compound.

5. The olefin polymerization catalyst component of any one of claims 1-4, **characterized in that**, the ester compound of compound B is selected from one or more of aliphatic monocarboxylate, aliphatic polycarboxylate, aromatic monocarboxylate, aromatic polycarboxylate, and a dihydric alcohol ester compound represented by formula (II); 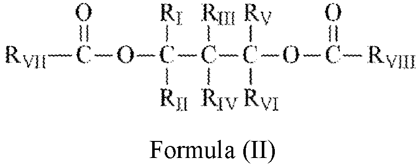 in formula (II), R_{I}, R_{II}, R_{III}, R_{IV}, R_{V}, and R_{VI} each are independently selected from hydrogen, substituted or unsubstituted C₁-C₁₀ aliphatic hydrocarbyl, substituted or unsubstituted C₆-C₁₀ aryl, and substituted or unsubstituted C₇-C₁₀ aralkyl; or, two or more groups of R_{I}, R_{II}, R_{III}, R_{IV}, R_{V}, and R_{VI} are bonded with each other to form a ring; and R_{VII} and R_{VIII} each are independently selected from substituted or unsubstituted C₁-C₁₀ linear alkyl, substituted or unsubstituted C₃-C₁₀ branched alkyl, substituted or unsubstituted C₃-C₂₀ cycloalkyl, substituted or unsubstituted C₆-C₂₀ aryl, and substituted or unsubstituted C₇-C₂₀ aryl aliphatic hydrocarbyl.

6. The olefin polymerization catalyst component of any one of claims 1-5, **characterized in that**, the ester compound of compound B is an alkyl ester of aromatic dicarboxylic acid.

7. The olefin polymerization catalyst component of any one of claims 1-6, **characterized in that**, the ether compound of compound B is a diether compound.

8. The olefin polymerization catalyst component of claim 7, **characterized in that**, the diether compound is selected from a 1,3-diether compound represented by (III); 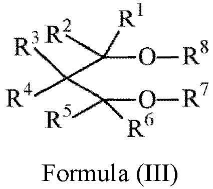 in formula (III), R¹, R², R³, R⁴, R⁵, and R⁶ each are independently selected from hydrogen, halogen, substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl; or, two or more groups of R¹, R², R³, R⁴, R⁵, and R⁶ are bonded with each other to form a ring; and R⁷ and R⁸ each are independently selected from substituted or unsubstituted C₁-C₂₀ linear alkyl, substituted or unsubstituted C₃-C₂₀ branched alkyl, substituted or unsubstituted C₃-C₂₀ cycloalkyl, substituted or unsubstituted C₆-C₂₀ aryl, and substituted or unsubstituted C₇-C₂₀ aralkyl.

9. The olefin polymerization catalyst component of claim 8, **characterized in that**, in formula (III), R¹, R², R⁵, and R⁶ each are hydrogen;
R⁷ and R⁸ each are independently one of substituted or unsubstituted C₁-C₄ linear alkyl, substituted or unsubstituted C₃-C₄ branched alkyl, more preferably methyl; and
R³ is any one of methyl, ethyl, n-propyl, and isopropyl, and R⁴ is any one of ethyl, n-propyl, isopropyl, n-butyl, isobutyl, t-butyl, isopentyl, 2-ethylhexyl, cyclopentyl, cyclohexyl, methylcyclohexyl, phenyl, and benzyl; or, R³ is hydrogen, and R⁴ is any one of ethyl, n-butyl, s-butyl, t-butyl, 2-ethylhexyl, cyclohexyethyl, diphenylmethyl, p-chlorophenyl, 1-naphthyl, and 1-decahydronaphthyl; or, R³ and R⁴ are the same and each are any one of ethyl, n-propyl, isopropyl, n-butyl, isobutyl, t-butyl, neopentyl, phenyl, benzyl, cyclohexyl, or cyclopentyl; or, R³ and R⁴ are bonded with each other to form cyclopentadienyl, fluorenyl, or indenyl.

10. The olefin polymerization catalyst component of any one of claims 1-9, **characterized in that**, in formula RₙSi(OR₆)₄₋ₙ, R and R₆ each are independently selected from hydrogen, substituted or unsubstituted C₁-C₆ linear alkyl, substituted or unsubstituted C₃-C₆ branched alkyl, substituted or unsubstituted C₃-C₆ cycloalkyl, substituted or unsubstituted C₆-C₁₀ aryl, and substituted or unsubstituted C₇-C₁₀ aralkyl, and n is an integer of 0 to 2; preferably, R and R₆ each are independently selected from methyl, ethyl, n-propyl, isopropyl, n-butyl, isobutyl, t-butyl, n-pentyl, isopentyl, phenyl, 2-hydroxyethyl or 3-hydroxypropyl, and n is 0 or 1.

11. An olefin polymerization catalyst system, **characterized in that**, the olefin polymerization catalyst system comprises the following components or a reaction product of the following components:
a. the olefin polymerization catalyst component of any one of claims 1-10;
b. an alkyl aluminum compound; and
c. optionally, at least one external electron donor compound.

12. A prepolymerization catalyst composition for olefin polymerization, **characterized in that**, the prepolymerization catalyst composition comprises:
a. the olefin polymerization catalyst system of claim 11, which is subjected to an olefin prepolymerization reaction step;
b. a prepolymer obtained from the olefin prepolymerization reaction step, which has a prepolymerization multiple of 0.1-1000 g olefin polymer/g catalyst component.

13. A olefin polymerization method, **characterized in that**, the olefin polymerization method comprises: contacting one or more olefins with at least one of the olefin polymerization catalyst system of claim 11 and the prepolymerization catalyst composition of claim 12, under olefin polymerization conditions.

14. The olefin polymerization method of claim 13, **characterized in that**, the one or more olefins are selected from an olefin represented by CH₂=CHR', wherein R' is selected from hydrogen, substituted or unsubstituted C₁-C₁₂ linear alkyl, substituted or unsubstituted of C₃-C₁₂ branched alkyl, and substituted or unsubstituted C₆-C₁₂ aryl.

15. The olefin polymerization method of claim 14, **characterized in that**, the olefin is propylene, or a mixture of propylene and an olefin represented by CH₂=CHR', wherein R' is selected from hydrogen, substituted or unsubstituted C₁-C₆ linear alkyl, and substituted or unsubstituted C₃-C₆ branched alkyl.
